# EUROPEAN PATENT APPLICATION

(11) **EP 3 988 607 A1**
(43) Date of publication of application: **27.04.2022**
(21) Application number: 20831872.5
(22) Date of filing: 08.06.2020
(51) Int. Cl.: C08K 5/541, C08K 7/18, C08L 83/07, C08K 3/105, C08K 3/40

(54) **HIGHLY THERMALLY-CONDUCTIVE SILICONE COMPOSITION AND CURED PRODUCT THEREOF**

(30) Priority: 24.06.2019 JP 2019116127
(71) Applicant: Shin-Etsu Chemical Co., Ltd., Tokyo 100-0005 (JP)
(72) Inventor: IWATA, Mitsuhiro, Annaka-shi, Gunma 379-0224 (JP)
(74) Representative: Mewburn Ellis LLP
(86) International application number: PCT/JP2020/022510
(87) International publication number: WO 2020/261958

(57) **Abstract**

This highly thermally-conductive silicone composition is obtained by blending, as thermally-conductive fillers at a specific ratio and in specific amounts in (A) a silicone composition containing an organopolysiloxane as a main agent, (B) a spherical magnesium oxide powder having an average sphericity of 0.8 or more, an average particle size of 80-150 µm, and a purity of 98 mass% or more, and (C) (C-I) a spherical aluminum oxide powder which has an average sphericity of 0.8 or more and an average particle size of 7-60 µm, and in which the proportion of rough particles of 96-150 µm is 0.1-30 mass% in the entire component (C-I) in a laser diffraction particle size distribution, and (C-II) a spherical or irregularly-shaped aluminum oxide powder having an average particle size of 0.1-4 µm. The thermal conductivity of the composition is 7.0 W/m·K or more, and the viscosity of the composition at 25°C is 30-800 Pa·s. This highly thermally-conductive silicone composition has excellent electrical insulating properties and thermal conductivity.

## Description

### TECHNICAL FIELD

This invention relates to a silicone composition having excellent electrical insulation and heat conduction and more particularly, to a silicone composition having excellent heat conduction and electrical insulation and a cured product thereof, which can be used as a heat dissipating member for electronic parts and built in electronic devices without causing damages to heat-generating electronic parts such as power devices, transistors, thyristors, and central processing units (CPUs).

### BACKGROUND ART

For heat-generating electronic parts such as power devices, transistors, thyristors, and CPUs, how to remove the heat generated during service is a critical problem. As the prior art heat removal means, it is a common practice to mount a heat-generating electronic part to a heat radiating fin or metal plate via an electrically insulating, heat dissipating sheet for heat release. The heat dissipating sheet used is made of a silicone resin having a heat conductive filler dispersed therein.

Since modern electronic parts generate larger amounts of heat in proportion to an increase in the integration of circuits in the parts, there is a need for a material having a significantly higher heat conductivity than in the prior art. For the purpose of increasing the heat conductivity of heat transfer materials, it is a common practice to incorporate highly heat conductive fillers such as aluminum oxide (alumina) powder and aluminum nitride powder in matrix resins (Patent Documents 1 to 4: JP-A 2005-162555, JP-A 2003-342021, JP-A 2002-280498, and JP-A 2005-209765).

As the means for increasing heat conductivity, Patent Document 5: JP 5755977 discloses a highly heat conductive resin composition in which a spherical aluminum oxide powder having an average particle size of 10 to 50 µm and an aluminum oxide powder having an average particle size of 0.3 to 1 µm, both having a specific average sphericity and hydroxy content, are present in a specific volume ratio and in a specific content. The spherical aluminum oxide powder having an average particle size of 50 µm at the maximum gives rise to the problem of insufficient thermal conductivity.

Also, a heat conductive silicone composition comprising an alumina powder having an average particle size of 0.1 to 100 µm is proposed, but a thermal conductivity and viscosity are not prescribed. Further, Patent Document 6: WO 2002/092693 discloses a heat conductive silicone composition in which a spherical alumina powder having an average particle size of 5 to 50 µm (exclusive of 5 µm) and a spherical or irregular shape alumina powder having an average particle size of 0.1 to 5 µm are present in a specific weight ratio and in a specific content. Like Patent Document 5, the average sphericity and hydroxy content of the spherical alumina having a large average particle size are prescribed nowhere. This is insufficient to achieve a high thermal conductivity.

Examples of the heat conductive fillers other than aluminum oxide include aluminum, copper, silver, boron nitride, and aluminum nitride. They exhibit high thermal performance, but are disadvantageous in view of cost. The use of metal powders such as aluminum, copper and silver gives rise to the problem that a heat conductive silicone composition and cured product are degraded in electrical insulation.

On the other hand, magnesium oxide has a thermal conductivity of 42 to 60 W/m·K, which is noteworthily higher than the conductivity (26 to 36 W/m·K) of alumina. Magnesium oxide has a Mohs hardness of 6 and a specific gravity of 3.65, and is lighter than alumina so that a heat conductive silicone composition and a cured product thereof may have a lighter weight. However, magnesium oxide has the shortcoming that it is highly hygroscopic. Patent Document 7: JP-A H05-239358 discloses a heat conductive silicone rubber composition loaded with magnesium oxide which is obtained by firing specific magnesium hydroxide at 1,100 to 1,600°C. For the reason that magnesium oxide is so hygroscopic that it exhibits strong alkalinity, there is the problem that the silicone rubber is liable to crack.

Then, Patent Document 8: JP-A H07-292251 discloses a heat conductive silicone resin composition comprising magnesium oxide which has been surface-treated with silazane and having improved moisture resistance. Since magnesium oxide has a very small particle size of 1 µm, an improvement in thermal conductivity is not expectable even when the loading of magnesium oxide is increased. It is not verified whether or not this method is valid when a powder having a larger particle size is used.

Also, Patent Document 9: JP-A H08-088488 discloses a heat conductive heat-dissipating sheet which is improved in moldability by combining spherical magnesium oxide with spherical alumina. Since magnesium oxide is used in an amount of at most about 20% by weight based on the total weight of the heat conductive fillers, the problem that the specific gravity is increased due to the majority of alumina remains unsolved as well as the problem that the reactor is worn during kneading.

The system having surface-treated magnesium oxide combined with alumina is regarded effective for solving the outstanding problems. Since magnesium oxide is improved in moisture resistance by hydrophobic treatment on its surface, there is obtained a heat conductive silicone resin composition which is suited for use under high humidity. When magnesium oxide is used in a volume ratio of at least 50% based on the total weight of magnesium oxide and alumina, the wear of the reactor is restrained. Since the use of a mixture of alumina and magnesium oxide as the heat conductive filler leads to a lighter specific gravity than the use of alumina alone, at the same loading, this prevents the heat conductive filler from settling down in the heat conductive silicone composition.

Then, Patent Document 10: JP 6075261 proposes a heat conductive silicone composition containing magnesium oxide and alumina in combination which has solved the outstanding problem. The shape and purity of magnesium oxide are not specified. As long as magnesium oxide having an average particle size of less than 80 µm is used, the composition is insufficient in thermal conductivity.

### PRIOR ART DOCUMENTS

### PATENT DOCUMENTS

Patent Document 1: JP-A 2005-162555
Patent Document 2: JP-A 2003-342021
Patent Document 3: JP-A 2002-280498
Patent Document 4: JP-A 2005-209765
Patent Document 5: JP 5755977
Patent Document 6: WO 2002/092693
Patent Document 7: JP-A H05-239358
Patent Document 8: JP-A H07-292251
Patent Document 9: JP-A H08-088488
Patent Document 10: JP 6075261

### SUMMARY OF INVENTION

### TECHNICAL PROBLEM

An object of the invention, which has been made under the above-mentioned circumstances, is to provide a highly heat conductive silicone composition having excellent electrical insulation and heat conduction, especially a highly heat conductive silicone composition suited as heat-dissipating members for electronic parts, and a cured product thereof.

### SOLUTION TO PROBLEM

Making extensive investigations to attain the above object, the inventor has found that the outstanding problems are solved by blending (B) a spherical magnesium oxide powder having an average sphericity of at least 0.8, an average particle size of 80 to 150 µm, and a purity of at least 98% by weight and (C) (C-I) a spherical aluminum oxide powder having an average sphericity of at least 0.8 and an average particle size of 7 to 60 µm, in which coarse particles having a size of 96 to 150 µm in laser diffractometry particle size distribution account for 0.1 to 30% by weight of the overall component (C-I), and (C-II) a spherical or irregular shape aluminum oxide powder having an average particle size of 0.1 to 4 µm in a specific ratio and adding a specific amount of the blend to a silicone composition based on (A) an organopolysiloxane. There is obtained a highly heat conductive silicone composition having excellent electrical insulation and heat conduction as well as ease of handling and working. The composition can be converted to a curable composition by blending a curing agent therein. The invention is predicated on this finding.

Accordingly, the invention provides a highly heat conductive silicone composition and a cured product thereof, as defined below.
[1] A highly heat conductive silicone composition comprising
   (A) an organopolysiloxane,
   (B) a spherical magnesium oxide powder having an average sphericity of at least 0.8, an average particle size of 80 to 150 µm, and a purity of at least 98% by weight, and
   (C) (C-I) a spherical aluminum oxide powder having an average sphericity of at least 0.8 and an average particle size of 7 to 60 µm, in which coarse particles having a size of 96 to 150 µm in laser diffractometry particle size distribution account for 0.1 to 30% by weight of the overall component (C-I), and (C-II) a spherical or irregular shape aluminum oxide powder having an average particle size of 0.1 to 4 µm, wherein
      a blending proportion of component (C-I) to component (C-II) ranges from 2.0:8.0 to 8.0:2.0 in volume ratio, a blending proportion of component (B) to component (C) ranges from 5.0:5.0 to 9.5:0.5 in volume ratio, the total amount of components (B) and (C) is 80 to 90% by volume of the composition, the composition has a thermal conductivity of at least 7.0 W/m·K as measured by the hot disk method according to ISO 22007-2 and a viscosity at 25°C of 30 to 800 Pa·s as measured by a spiral viscometer at a speed of 10 rpm.
[2] The highly heat conductive silicone composition of [1] wherein component (A) accounts for 1 to 6% by weight of the composition.
[3] The highly heat conductive silicone composition of [1] or [2] which is of addition reaction cure type using (A-I) an organopolysiloxane having on the average at least 0.1 silicon-bonded alkenyl group per molecule as component (A), of condensation cure type using (A-II) an organopolysiloxane having at least 2 silanol groups or silicon-bonded hydrolyzable groups per molecule as component (A), or of organic peroxide cure type using (A-III) an organopolysiloxane having at least 1 silicon-bonded alkenyl group per molecule as component (A).
[4] The highly heat conductive silicone composition of any one of [1] to [3], further comprising (D) a surface treating agent.
[5] The highly heat conductive silicone composition of [4] which contains (D-1) a silane coupling agent as component (D) in an amount of 0.1 to 5 parts by weight per 100 parts by weight of components (B) and (C) combined.
[6] The highly heat conductive silicone composition of [4] wherein
   (A-I) an organopolysiloxane having on the average at least 0.1 silicon-bonded alkenyl group per molecule or (A-III) an organopolysiloxane having at least 1 silicon-bonded alkenyl group per molecule is used as component (A), and
   (D-II) an organopolysiloxane containing per molecule at least 1 silyl group having the general formula (1):

      -SiR¹ₐ(OR²)₃₋ₐ (1)
   wherein R¹ is independently an unsubstituted or substituted monovalent hydrocarbon group, R² is independently an alkyl group, alkoxyalkyl group, alkenyl group or acyl group, and "a" is 0, 1 or 2, and having a viscosity at 25°C of 0.01 to 30 Pa·s is contained as component (D) in an amount of 5 to 900 parts by weight per 100 parts by weight of component (A-I) or (A-III).
[7] The highly heat conductive silicone composition of any one of [1] to [6], further comprising (E) spherical glass beads or irregular shape glass having a maximum median particle size of at least 160 µm and a SiO₂ content of at least 50% by weight, in an amount of 0.01 to 10% by weight based on the total weight of the composition.
[8] A cured product of the highly heat conductive silicone composition of any one of [3] to [7].

### ADVANTAGEOUS EFFECTS OF INVENTION

According to the invention, there is provided a highly heat conductive silicone composition having excellent electrical insulation, heat conduction, and moisture resistance.

### DESCRIPTION OF EMBODIMENTS

Now the invention is described in detail. It is noted that the term "highly heat conductive silicone composition" is sometimes abbreviated as "silicone composition."

### [Component (A)]

Component (A) is an organopolysiloxane which is a base in the inventive silicone composition. The organopolysiloxane contains silicon-bonded groups which are unsubstituted or substituted, preferably C₁-C₂₀, more preferably C₁-C₆ monovalent hydrocarbon groups. Examples thereof include straight alkyl groups such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and eicosyl; branched alkyl groups such as isopropyl, tert-butyl, isobutyl, 2-methylundecyl, and 1-hexylheptyl; cyclic alkyl groups such as cyclopentyl, cyclohexyl, and cyclododecyl; alkenyl groups such as vinyl, allyl, butenyl, pentenyl, and hexenyl; aryl groups such as phenyl, tolyl, and xylyl; aralkyl groups such as benzyl, phenethyl, and 2-(2,4,6-trimethylphenyl)propyl; and halogenated alkyl groups such as 3,3,3-trifluoropropyl and 3-chloropropyl. Inter alia, alkyl, alkenyl and aryl groups are preferred, with methyl, vinyl and phenyl being most preferred.

The organopolysiloxane as component (A) has a viscosity at 25°C which is preferably in the range of 20 to 100,000 mPa·s, more preferably 50 to 100,000 mPa·s, even more preferably 50 to 50,000 mPa·s, most preferably 100 to 50,000 mPa·s, but not limited thereto. If the viscosity is too low, there is a risk that the silicone composition considerably degrades its physical properties. If the viscosity is too high, there is a risk that the silicone composition is considerably awkward to handle and work. It is noted that the viscosity is measured by a rotational viscometer (the same holds true, hereinafter).

The organopolysiloxane as component (A) has a molecular structure which may be straight, branched, partially branched straight, or dendritic (dendrimer), for example, but not limited thereto, preferably straight or partially branched straight. Examples of the organopolysiloxane include a homopolymer having such a molecular structure, a copolymer composed of such molecular structures, and mixtures of these polymers.

Examples of the organopolysiloxane as component (A) include molecular chain both end dimethylvinylsiloxy-capped dimethylpolysiloxane, molecular chain both end methylphenylvinylsiloxy-capped dimethylpolysiloxane, molecular chain both end dimethylvinylsiloxy-capped dimethylsiloxane/methylphenylsiloxane copolymers, molecular chain both end dimethylsiloxy-capped dimethylsiloxane/methylvinylsiloxane copolymers, molecular chain both end trimethylsiloxy-capped dimethylsiloxane/methylvinylsiloxane copolymers, molecular chain both end dimethylvinylsiloxy-capped methyl(3,3,3-trifluoropropyl)polysiloxane, molecular chain both end silanol-capped dimethylsiloxane/methylvinylsiloxane copolymers, molecular chain both end silanol-capped dimethylsiloxane/methylvinylsiloxane/methylphenylsiloxane copolymers, and organosiloxane copolymers consisting of siloxane units of the formula: (CH₃)₃SiO_{1/2}, siloxane units of the formula: (CH₃)₂(CH₂=CH)SiO_{1/2}, siloxane units of the formula: CH₃SiO_{3/2}, and siloxane units of the formula: (CH₃)₂SiO_{2/2}. When the composition is of condensation reaction cure type, use may also be made of molecular chain both end silanol-capped dimethylpolysiloxane, molecular chain both end silanol-capped dimethylsiloxane/methylphenylsiloxane copolymers, molecular chain both end trimethoxysiloxy-capped dimethylpolysiloxane, molecular chain both end trimethoxysiloxy-capped dimethylsiloxane/methylphenylsiloxane copolymers, molecular chain both end methyldimethoxysiloxy-capped dimethylpolysiloxane, molecular chain both end triethoxysiloxy-capped dimethylpolysiloxane, and molecular chain both end trimethoxysilylethyl-capped dimethylpolysiloxane. These siloxanes may be used alone or in a suitable combination of two or more.

In the embodiment wherein the silicone composition cures through hydrosilylation reaction, component (A) is preferably (A-I) an organopolysiloxane having on the average from 0.1 to 20 silicon-bonded alkenyl groups per molecule, more preferably an organopolysiloxane having on the average from 0.5 to 20 silicon-bonded alkenyl groups per molecule, even more preferably an organopolysiloxane having on the average from 0.8 to 20 silicon-bonded alkenyl groups per molecule. If the average number of silicon-bonded alkenyl groups per molecule is less than the lower limit of the range, there is a tendency that the resulting silicone composition does not cure to a full extent. Examples of the silicon-bonded alkenyl group in the organopolysiloxane include alkenyl groups as exemplified above, preferably vinyl. Examples of silicon-bonded groups other than the alkenyl group in the organopolysiloxane include straight alkyl groups, branched alkyl groups, cyclic alkyl groups, aryl groups, aralkyl groups, and halogenated alkyl groups as mentioned above. Of these, alkyl and aryl groups are preferred, with methyl and phenyl being most preferred.

In the embodiment wherein the silicone composition cures through condensation reaction, component (A) is preferably (A-II) an organopolysiloxane having at least 2 silanol groups or silicon-bonded hydrolyzable groups per molecule. Examples of the silicon-bonded hydrolyzable group in the organopolysiloxane include alkoxy groups such as methoxy, ethoxy and propoxy; alkenoxy groups such as vinyloxy, propenoxy, isopropenoxy, and 1-ethyl-2-methylvinyloxy; alkoxyalkoxy groups such as methoxyethoxy, ethoxyethoxy, and methoxypropoxy; acyloxy groups such as acetoxy and octanoyloxy; ketoxime groups such as dimethylketoxime and methylethylketoxime; amino groups such as dimethylamino, diethylamino, and butylamino; aminoxy groups such as dimethylaminoxy diethylaminoxy; and amide groups such as N-methylacetamide and N-ethylacetamide. Examples of silicon-bonded groups other than the silanol group and silicon-bonded hydrolyzable group in the organopolysiloxane include straight alkyl groups, branched alkyl groups, cyclic alkyl groups, alkenyl groups, aryl groups, aralkyl groups, and halogenated alkyl groups as mentioned above.

In the embodiment wherein the silicone composition cures through free radical reaction with the aid of organic peroxide, component (A) is preferably (A-III) an organopolysiloxane having at least 1 silicon-bonded alkenyl group per molecule, though not limited thereto. Examples of the silicon-bonded alkenyl group in the organopolysiloxane include alkenyl groups as exemplified above, with vinyl being preferred. Examples of silicon-bonded groups other than the alkenyl group in the organopolysiloxane include straight alkyl groups, branched alkyl groups, cyclic alkyl groups, aryl groups, aralkyl groups, and halogenated alkyl groups as mentioned above. Of these, alkyl and aryl groups are preferred, with methyl and phenyl being most preferred.

Component (A) is preferably blended in an amount of 1 to 6% by weight, more preferably 1 to 5.8% by weight of the silicone composition. If the amount of component (A) is too small, the resulting composition may have too high a viscosity and be difficult to handle. If the amount of component (A) is too large, it may be difficult to endow the composition with a high thermal conductivity.

### [Component (B)]

Component (B) is a spherical magnesium oxide powder having an average sphericity of at least 0.8, an average particle size of 80 to 150 µm, and a purity of at least 98% by weight. A mixture of two or more species having different average particle sizes may be used as long as the above ranges are met.

The magnesium oxide powder should have an average sphericity of at least 0.8, preferably at least 0.9. If the average sphericity is less than 0.8, fluidity may decline and points of contact between particles may remarkably increase, with the tendency that the sheet surface becomes more ragged, leading to increased interfacial thermal resistance and poor thermal conductivity.

As used herein, the average sphericity can be measured by taking a particle image under a scanning electron microscope, inputting the image to an image analyzer, for example, model JSM-7500F by JEOL Ltd., and performing the following steps. That is, the projection area (X) and circumferential length (Z) of a particle are measured from the photograph. Provided that a true circle corresponding to the circumferential length (Z) has an area (Y), the sphericity of the particle is represented as X/Y. Assume a true circle having the same circumferential length as the circumferential length (Z) of a sample particle. Since Z=2πr and Y=πr², then Y=π^{∗}(Z/2π)², the sphericity of an individual particle is computed as sphericity = X/Y = X^{∗}4π/Z². In this way, the sphericity of arbitrary 100 particles is determined, and their average value is reported as average sphericity (the same holds true, hereinafter).

The magnesium oxide powder should have an average particle size of 80 to 150 µm, preferably 80 to 130 µm. If the average particle size is too small, there is a tendency that it is difficult to achieve a high thermal conductivity as desired. If the average particle size is too large, the sheet surface becomes more ragged, leading to increased interfacial thermal resistance and poor thermal conductivity.

As used herein, the average particle size is a volume basis average particle size as measured, for example, by a laser diffraction particle size distribution analyzer SALD-2300 by Shimadzu Corp. A test sample is prepared by adding 50 cc of deionized water and 5 g of a heat conductive powder to be measured to a glass beaker, agitating the contents with a spatula, and conducting dispersion treatment on an ultrasonic cleaner for 10 minutes. Using a dropping pipette, droplets of the suspension of the heat conductive powder as dispersion-treated were added one by one to the sampler section of the analyzer until an absorbance becomes steady enough to measure. Measurement is made at the point of time when the absorbance becomes steady. The laser diffraction particle size distribution analyzer is designed such that a particle size distribution is calculated from data of the light intensity distribution pattern of diffracted/scattered light from particles as detected by the sensor. The average particle size is determined by multiplying the measured value of particle size by a relative particle amount (differential %), and dividing the product by the total (100%) of relative particle amounts. Notably, the average particle size is an average diameter of particles (the same holds true, hereinafter).

The magnesium oxide powder is of a cubic crystal structure (sodium chloride type structure) and desirably has a specific gravity of at least 3.4. If the specific gravity is less than 3.4, the proportion of voids and low crystalline phase in the particle interior increases to such a level that it is difficult to increase a thermal conductivity. The particle size of magnesium oxide powder can be tailored by classification and mixing operations.

The magnesium oxide powder should have a purity of at least 98% by weight, preferably at least 99% by weight. If the purity of magnesium oxide powder is below 98% by weight, there is a tendency for a thermal conductivity to lower. Notably, the magnesium oxide powder contains such impurities as calcium oxide, silicon dioxide, aluminum oxide, and iron oxide.

As used herein, the purity can be measured by the ICP emission spectroscopy (the same holds true, hereinafter).

Preferably, the spherical magnesium oxide powder as component (B) is treated on their surface with the surface treating agent as component (D) to be described later. By the surface treatment, the highly heat conductive silicone composition is further improved in moisture resistance.

Component (B) is preferably blended in an amount of 3,400 to 6,200 parts by weight, more preferably 3,400 to 6,000 parts by weight per 100 parts by weight of component (A). If component (B) is too much, it is sometimes difficult to knead the inventive composition. If component (B) is too less, it is sometimes difficult to achieve a high thermal conductivity as desired.

### [Component (C)]

Component (C) is an aluminum oxide powder which contains components (C-I) and (C-II) as defined below.

### Component (C-I)

Component (C-I) is a spherical aluminum oxide powder having an average sphericity of at least 0.8 and an average particle size of 7 to 60 µm, in which coarse particles having a size of 96 to 150 µm in laser diffractometry particle size distribution account for 0.1 to 30% by weight of the overall component (C-I). The powder may be used alone or in admixture of two or more species having different average particle sizes as long as the invention is not impaired.

Component (C-I) should have an average sphericity of at least 0.8, preferably at least 0.9. If the average sphericity is less than 0.8, fluidity may decline and points of contact between particles may remarkably increase, with a possibility that the sheet surface becomes more ragged, leading to increased interfacial thermal resistance and poor thermal conductivity.

Component (C-I) should have an average particle size of 7 to 60 µm, preferably 9 to 50 µm. If the average particle size is less than 7 µm, points of contact between particles decrease because of the overlap of average particle size between components (C-I) and (C-II), with a tendency for thermal conductivity to decline due to an increase of thermal resistance by contact between particles. The effect of adding component (C-I) is thus insignificant. If the average particle size exceeds 60 µm, points of contact between particles may remarkably increase, with a tendency to increase interfacial thermal resistance and aggravate thermal conductivity.

In component (C-I), coarse particles having a size of 96 to 150 µm in laser diffractometry particle size distribution should account for 0.1 to 30% by weight, preferably 0.1 to 20% by weight of the overall component (C-I). If the proportion of coarse particles is too high, points of contact between particles may remarkably increase, with possibilities of increasing interfacial thermal resistance and aggravating thermal conductivity. If the proportion of coarse particles is too low, it may be difficult to achieve a high thermal conductivity as desired.

Component (C-I) is preferably blended in an amount of 380 to 2,700 parts by weight, more preferably 380 to 2,500 parts by weight per 100 parts by weight of component (A). If component (C-I) is too much, the composition may become less flowing. If component (C-I) is too less, it may be difficult to achieve a high thermal conductivity as desired.

### Component (C-II)

Component (C-II) is an aluminum oxide powder having an average particle size of 0.1 to 4 µm, which may be of spherical or irregular shape. It is noted that shapes other than spherical are irregular. The powder may be used alone or in admixture of two or more species having different average particle sizes as long as the invention is not impaired.

Component (C-II) should have an average particle size of 0.1 to 4 µm, preferably 0.5 to 2 µm. If the average particle size is less than 0.1 µm, points of contact between particles decrease, with a tendency for thermal conductivity to decline due to an increase of thermal resistance by contact between particles. If the average particle size exceeds 4 µm, the effect of adding component (C-II) is insignificant because of the overlap of average particle size between components (C-I) and (C-II). It is noted that when component (C-II) is spherical, its average sphericity is preferably at least 0.8 like component (B).

Component (C-II) is preferably blended in an amount of 380 to 2,700 parts by weight, more preferably 380 to 2,500 parts by weight per 100 parts by weight of component (A). If component (C-II) is too much, the composition may become less flowable. If component (C-II) is too less, the composition may become less flowable.

The aluminum oxide powder as component (C) has a crystalline structure which may be either monocrystalline or polycrystalline, a crystalline phase which is desirably α phase in view of high thermal conductivity, and a specific gravity which is desirably at least 3.7. If the specific gravity is less than 3.7, the proportion of voids and low crystalline phases in the particle interior increases to such a level that it is difficult to increase a thermal conductivity. The particle size of aluminum oxide powder can be tailored by classification and mixing operations.

Preferably, the aluminum oxide powder as component (C) is treated on their surface with the surface treating agent as component (D) to be described later. With the surface treatment, the highly heat conductive silicone composition tends to reduce its viscosity.

A blending proportion of component (C-I) to component (C-II), that is, (C-I):(C-II) ranges from 2.0:8.0 to 8.0:2.0, preferably from 3:7 to 7:3, more preferably from 4:6 to 6:4 in volume ratio. If the ratio of component (C-I) is less than 2/10 in volume ratio, there is a tendency of aggravating the loading of the heat conductive filler (consisting of components (B) and (C), the same holds true, hereinafter). Inversely, if the ratio of component (C-I) is greater than 8/10 in volume ratio, there is a tendency of interfering with tight loading of the heat conductive filler and reducing thermal conductivity.

A blending proportion of component (B) to component (C), that is, (B):(C) ranges from 5.0:5.0 to 9.5:0.5, preferably from 5.0:5.0 to 9:1, more preferably from 5.2:4.8 to 9.0:1.0 in volume ratio. If the ratio of component (B) is less than 5/10 in volume ratio, the silicone composition may have an insufficient thermal conductivity. Inversely, if the ratio of component (B) is greater than 9.5/10 in volume ratio, loading of the heat conductive filler becomes difficult.

The total amount of components (B) and (C) blended is 80 to 90% by volume, preferably 80 to 85% by volume of the silicone composition. If the total amount is less than 80% by volume, the silicone composition may have an insufficient thermal conductivity. If the total amount exceeds 90% by volume, loading of the heat conductive filler becomes difficult.

### [Component (D)]

Preferably the silicone composition further comprises (D) a surface treating agent, with which components (B) and (C) are surface treated. Component (D-I) and/or (D-II) to be described below is preferably used as the surface treating agent (D).

### Component (D-I)

Component (D-I) is a silane coupling agent. Suitable silane coupling agents include vinyl base silane coupling agents, epoxy base silane coupling agents, acrylic silane coupling agents, and long-chain alkyl base silane coupling agents, which may be used alone or in a suitable combination of two or more. Inter alia, long-chain alkyl base silane coupling agents are preferred, with decyltrimethoxysilane being most preferred.

The method for the surface treatment of components (B) and (C) with component (D-I) may be selected from a spray method through a fluid nozzle, an agitation method utilizing shearing forces, a dry method on a ball mill or mixer, and a wet method using water or organic solvents. The agitation method is performed with such forces that the spherical magnesium oxide powder and aluminum oxide powder may not be broken. The treating temperature or the drying temperature after treatment employed in the dry method is determined depending on the type of surface treating agent, within the range that does not cause volatilization or decomposition to the surface treating agent, preferably in the range of 80 to 180°C.

When blended, the amount of component (D-I) used is preferably 0.1 to 5 parts by weight per 100 parts by weight of components (B) and (C) combined. If the amount of component (D-I) is less than 0.1 part by weight, its effect is little. If the amount exceeds 5 parts by weight, the effect corresponding to the amount is not exerted.

### Component (D-II)

Component (D-II) is an organopolysiloxane containing at least one silyl group having the general formula (1) per molecule and having a viscosity at 25°C of 0.01 to 30 Pa·s,

-SiR¹ₐ(OR²)₃₋ₐ (1)

wherein R¹ is independently an unsubstituted or substituted monovalent hydrocarbon group, R² is independently an alkyl, alkoxyalkyl, alkenyl or acyl group, and "a" is 0, 1 or 2.

Component (D-II) is preferably used in the composition containing an organopolysiloxane having a silicon-bonded alkenyl group as component (A), especially the composition of addition reaction cure type containing component (A-I) as component (A), or the composition of organic peroxide cure type containing (A-III) an organopolysiloxane having at least one silicon-bonded alkenyl group per molecule as component (A).

Component (D-II) is typically an organopolysiloxane having the general formula (2): 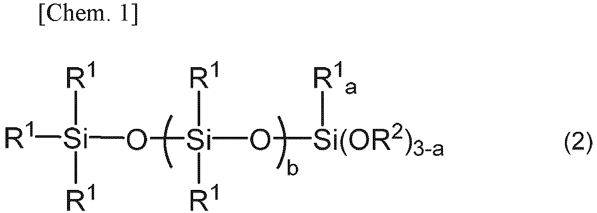 wherein R¹ is independently an unsubstituted or substituted monovalent hydrocarbon group, R² is independently an alkyl, alkoxyalkyl, alkenyl or acyl group, b is an integer of 2 to 100, and "a" is 0, 1 or 2.

In formulae (1) and (2), R¹ is independently an unsubstituted or substituted monovalent hydrocarbon group of preferably 1 to 10 carbon atoms, more preferably 1 to 6 carbon atoms, even more preferably 1 to 3 carbon atoms. Examples thereof include straight alkyl groups, branched alkyl groups, cyclic alkyl groups, alkenyl groups, aryl groups, aralkyl groups, and halogenated alkyl groups. Exemplary straight alkyl groups include methyl, ethyl, propyl, hexyl, octyl and decyl. Exemplary branched alkyl groups include isopropyl, isobutyl, tert-butyl and 2-ethylhexyl. Exemplary cyclic alkyl groups include cyclopentyl and cyclohexyl. Exemplary alkenyl groups include vinyl and allyl. Exemplary aryl groups include phenyl and tolyl. Exemplary aralkyl groups include 2-phenylethyl and 2-methyl-2-phenylethyl. Exemplary halogenated alkyl groups include 3,3,3-trifluoropropyl, 2-(nonafluorobutyl)ethyl and 2-(heptadecafluorooctyl)ethyl. R¹ is preferably a group free of aliphatic unsaturation, more preferably methyl or phenyl.

In formulae (1) and (2), R² is independently an alkyl, alkoxyalkyl, alkenyl or acyl group. Suitable alkyl groups include straight alkyl groups, branched alkyl groups and cyclic alkyl groups as exemplified above for R¹. Exemplary alkoxyalkyl groups include methoxyethyl and methoxypropy. Exemplary alkenyl groups are as exemplified above for R¹. Exemplary acyl groups include acetyl and octanoyl. R² is preferably a group of 1 to 8 carbon atoms, more preferably an alkyl group, most preferably methyl or ethyl.

The subscript b is an integer of 2 to 100, preferably 5 to 50, and "a" is 0, 1 or 2, preferably 0.

Preferred examples of the organopolysiloxane as component (D-II) are shown below. 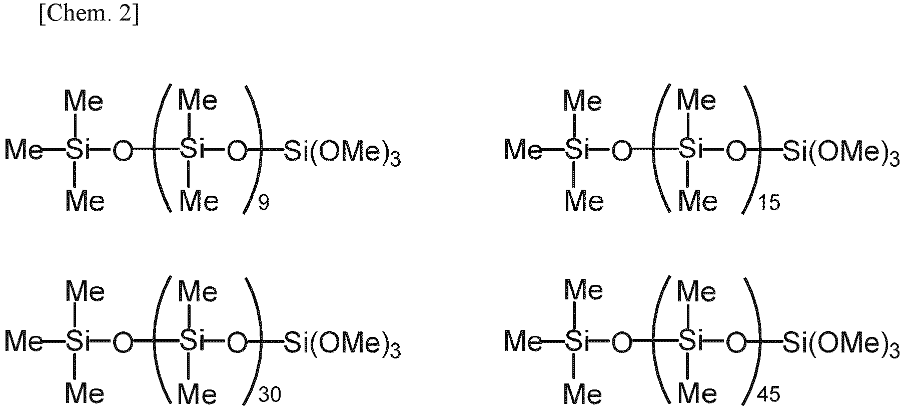 Herein Me stands for methyl.

The organopolysiloxane as component (D-II) typically has a viscosity at 25°C of 0.01 to 30 Pa·s, preferably 0.01 to 10 Pa·s. If the viscosity is lower than 0.01 Pa·s, the silicone composition is likely to undergo oil bleeding and to sag. If the viscosity exceeds 30 Pa·s, the silicone composition may have extremely poor flow and become awkward in coating operation.

The method for the surface treatment of components (B) and (C) with component (D-II) may be selected from a spray method through a fluid nozzle, an agitation method utilizing shearing forces, a dry method on a ball mill or mixer, and a wet method using water or organic solvents. The agitation method is performed with such forces that the spherical magnesium oxide powder and aluminum oxide powder may not be broken. The treating temperature or the drying temperature after treatment employed in the dry method is determined depending on the type of surface treating agent, within the range that does not cause volatilization or decomposition to the surface treating agent, preferably in the range of 80 to 180°C.

When blended, the amount of component (D-II) used is preferably 5 to 900 parts by weight, more preferably 10 to 900 parts by weight, even more preferably 20 to 700 parts by weight per 100 parts by weight of component (A). If the amount of component (D-II) is too small, there is a propensity for a viscosity buildup to occur and at the worst, interfere with kneading. If the amount is too much, a substantial amount of (D-II) may bleed out of the composition.

### [Component (E)]

The highly heat conductive silicone composition of the invention may further comprise (E) spherical glass beads or irregular shape glass having a maximum median particle size (D₅₀) of at least 160 µm and a SiO₂ content of at least 50% by weight. Inclusion of component (E), even in a very small amount, allows the highly heat conductive silicone composition to have an adequate thickness.

Component (E) should have a maximum median particle size of at least 160 µm, preferably 160 to 300 µm, which is characteristically larger than the average particle size of component (B). If the maximum median particle size is less than 160 µm, the composition sometimes fails to insure a thickness as desired. It is noted that the median particle size may be measured by the laser diffraction method, for example, a laser diffraction particle size distribution analyzer SALD-2300 by Shimadzu Corp.

Component (E) typically has a SiO₂ content of at least 50% by weight, preferably 50 to 99.99% by weight. If the SiO₂ content is less than 50% by weight, the desired thickness may not be insured due to brittleness. Notably, the SiO₂ content can be measured by the ICP emission spectroscopy.

The material of component (E) is soda-lime glass, soda-lime silica glass, or borosilicate glass. From the standpoint of uniformity of cured thickness, component (E) prefers spherical shape to irregular shape. Where component (E) is spherical glass beads, it preferably has an average sphericity of at least 0.8 like components (B) and (C).

When blended, component (E) is preferably added in a small amount as long as the benefits of the invention are not impaired. For preventing the highly heat conductive silicone composition from outstandingly lowering its thermal conductivity, the amount of component (E) is preferably 0.01 to 10% by weight, more preferably 0.01 to 5% by weight based on the total weight of the silicone composition.

The highly heat conductive silicone composition of the invention may be used as such or converted to a curable composition by further blending a curing agent.

The curable highly heat conductive silicone composition may take any of the following three forms. By using any one of organopolysiloxanes (A-I) to (A-III) as the organopolysiloxane (A) or base polymer and blending the spherical magnesium oxide powder (B) and the aluminum oxide powder (C), the composition may be formulated to:
[i] a highly heat conductive silicone composition of addition reaction cure type,
[ii] a highly heat conductive silicone composition of condensation reaction cure type, or
[iii] a highly heat conductive silicone composition of organic peroxide cure type.

Of these, [i] highly heat conductive silicone composition of addition reaction cure type is preferred because of fast cure and no by-product formation. Each composition is described below in detail.

### [i] Highly heat conductive silicone composition of addition reaction cure type

In the embodiment wherein the silicone composition is a highly heat conductive silicone composition of addition reaction cure type adapted to cure through hydrosilylation reaction, it uses component (A-I) as component (A) and further contains the following components, namely components (F) and (G) as the curing agent,
(F) an organohydrogenpolysiloxane having at least two silicon-bonded hydrogen atoms,
(G) a platinum group metal based curing catalyst, and optionally
(H) an addition reaction regulator.

### [Component (F)]

Component (F) is an organohydrogenpolysiloxane having at least two silicon-bonded hydrogen atoms, which acts as a crosslinker.

Besides the silicon-bonded hydrogen atoms, the organohydrogenpolysiloxane contains other groups, examples of which include straight alkyl groups, branched alkyl groups, cyclic alkyl groups, aryl groups, aralkyl groups, and halogenated alkyl groups, as mentioned above for component (A), preferably alkyl and aryl groups, more preferably methyl and phenyl.

Component (F) has a viscosity at 25°C which is preferably in the range of 1 to 100,000 mPa·s, more preferably 1 to 5,000 mPa·s, but not limited thereto.

Component (F) has a molecular structure which may be straight, branched, partially branched straight, or dendritic (dendrimer). Component (F) has at least two, preferably 2 to 50 silicon-bonded hydrogen atoms in the molecule, which may be attached at ends and/or intermediate positions of the molecular chain. Examples of the organopolysiloxane include a homopolymer having such a molecular structure, a copolymer composed of such molecular structures, and mixtures of these polymers.

Examples of component (F) include molecular chain both end dimethylhydrogensiloxy-capped dimethylpolysiloxane, molecular chain both end trimethylsiloxy-capped dimethylsiloxane/methylhydrogensiloxane copolymers, molecular chain both end dimethylhydrogensiloxy-capped dimethylsiloxane/methylhydrogensiloxane copolymers, and organosiloxane copolymers consisting of siloxane units of the formula: (CH₃)₃SiO_{1/2}, siloxane units of the formula: (CH₃)₂HSiO_{1/2}, and siloxane units of the formula: SiO_{4/2}, which may be used alone or in a suitable combination of two or more.

It is noted that the organohydrogensiloxane as component (F) is different from component (A-I), organopolysiloxane having a silicon-bonded alkenyl group and from component (D-II) in that it is free of a hydrolyzable group.

Component (F) is blended in an amount necessary for the silicone composition to cure, specifically such that the amount of silicon-bonded hydrogen in component (F) is preferably in the range of 0.1 to 10 moles, more preferably 0.1 to 5 moles, even more preferably 0.1 to 3 moles per mole of silicon-bonded alkenyl group in component (A-I). If the amount of component (F) is less than the lower limit of the range, there is a tendency that the resulting silicone composition does not cure to a full extent. If the amount of component (F) exceeds the upper limit of the range, the cured silicone may become very hard and develop a number of cracks on the surface.

### [Component (G)]

Component (G) is a platinum group metal based curing catalyst for promoting the cure of the silicone composition. Examples include chloroplatinic acid, alcohol solutions of chloroplatinic acid, platinum-olefin complexes, platinum-alkenylsiloxane complexes, and platinum-carbonyl complexes.

Component (G) is blended in an amount necessary for the silicone composition to cure, specifically such that the amount of platinum metal in component (G) is preferably in the range of 0.01 to 1,000 ppm, more preferably 0.1 to 500 ppm by weight based on component (A-I). If the amount of component (G) is less than the lower limit of the range, there is a tendency that the resulting silicone composition does not cure to a full extent. Even when the amount of component (G) exceeds the upper limit of the range, the resulting silicone composition does not outstandingly accelerate its cure speed.

### [Component (H)]

Component (H) is an addition reaction regulator or cure reaction inhibitor which may be blended for adjusting the cure speed of the silicone composition to improve the ease of handling and working. Suitable cure reaction inhibitors include acetylene compounds such as 2-methyl-2-butyn-2-ol, 2-phenyl-3-butyn-2-ol, and 1-ethynyl-1-cyclohexanol; en-yne compounds such as 3-methyl-3-penten-1-yne and 3,5-dimethyl-3-hexen-1-yne; hydrazine compounds, phosphine compounds, and mercaptan compounds, which may be used alone or in suitable combinations of two or more.

When used, the amount of component (H) blended is preferably 0.0001 to 1% by weight of the silicone composition. As long as the amount of component (H) is in the range, the silicone composition is more adequate in working and cure speed.

### [ii] Highly heat conductive silicone composition of condensation reaction cure type

In the embodiment wherein the silicone composition is a highly heat conductive silicone composition of condensation reaction cure type, it uses component (A-II) as component (A) and further contains the following component, namely component (I) as the curing agent,
(I) a silane having at least three silicon-bonded hydrolyzable groups per molecule or a partial hydrolyzate thereof and optionally,
(J) a condensation reaction catalyst.

### [Component (I)]

Component (I) is a silane having at least three silicon-bonded hydrolyzable groups per molecule or a partial hydrolyzate thereof, which serves as a curing agent. Examples of the silicon-bonded hydrolyzable group in the silane include alkoxy, alkoxyalkoxy, acyloxy, ketoxime, alkenoxy, amino, aminoxy, and amide groups as mentioned above. Besides the hydrolyzable group, the silane may have a group bonded to a silicon atom, for example, any of straight alkyl, branched alkyl, cyclic alkyl, alkenyl, aryl, aralkyl, and halogenated alkyl groups as mentioned for component (A).

Examples of the silane or partial hydrolyzate thereof include methyltriethoxysilane, vinyltriethoxysilane, vinyltriacetoxysilane, and ethyl orthosilicate.

Component (I) is blended in an amount necessary for the silicone composition to cure, specifically such that the amount of component (I) is preferably in the range of 0.01 to 20 parts by weight, more preferably 0.1 to 10 parts by weight per 100 parts by weight of component (A-II). If the amount of the silane or partial hydrolyzate thereof is less than the lower limit of the range, the resulting silicone composition may degrade its storage stability. If the amount exceeds the upper limit of the range, the resulting silicone composition may be substantially retarded in cure.

### [Component (J)]

The condensation reaction catalyst (J) is an optional component. It is not essential when a silane having a hydrolyzable group such as an aminoxy, amino or ketoxime group is used as the curing agent.

Examples of the condensation reaction catalyst include organic titanates such as tetrabutyl titanate and tetraisopropyl titanate; organic titanium chelates such as diisopropoxybis(acetylacetate)titanium and diisopropoxybis(ethylacetoacetate)titanium; organic aluminum compounds such as aluminum tris(acetylacetonate) and aluminum tris(ethylacetoacetate); organic zirconium compounds such as zirconium tetra(acetylacetonate) and zirconium tetrabutyrate; organic tin compounds such as dibutyltin dioctoate, dibutyltin dilaurate, and butyltin 2-ethylhexanoate; metal salts of organic carboxylic acids such as tin naphthenate, tin oleate, tin butyrate, cobalt naphthenate, and zinc stearate; amine compounds and salts thereof such as hexylamine and dodecylamine phosphate; quaternary ammonium salts such as benzyltriethylammonium acetate; alkali metal salts such as potassium acetate and lithium nitrate; dialkylhydroxylamines such as dimethylhydroxylamine and diethylhydroxylamine; and organic silicon compounds having a guanidyl group.

When used, component (J) is blended in an amount necessary for the silicone composition to cure, specifically such that the amount of component (J) is preferably 0.01 to 20 parts by weight, more preferably 0.1 to 10 parts by weight per 100 parts by weight of component (A). If the amount of component (J) is less than the lower limit of the range, there is a tendency that the resulting silicone composition does not cure to a full extent. If the amount exceeds the upper limit of the range, there is a tendency that the resulting silicone composition degrades its storage stability.

### [iii] Highly heat conductive silicone composition of organic peroxide cure type

In the embodiment wherein the silicone composition is a highly heat conductive silicone composition of organic peroxide cure type, it uses component (A-III) as component (A) and further contains the following component, namely component (K) as the curing agent,
(K) an organic peroxide.

### [Component (K)]

Examples of the organic peroxide (K) include benzoyl peroxide, dicumyl peroxide, 2,5-dimethylbis(2,5-tert-butylperoxy)hexane, di-tert-butyl peroxide, and tert-butyl perbenzoate.

Component (K) is blended in an amount necessary for the silicone composition to cure, specifically such that the amount of component (K) is preferably 0.1 to 5 parts by weight per 100 parts by weight of component (A-III) or organopolysiloxane. If the amount of component (K) is less than the lower limit of the range, there is a tendency that the resulting silicone composition does not cure to a full extent. Even when the amount exceeds the upper limit of the range, the resulting silicone composition does not accelerate its cure speed and the excess can rather cause voids.

The inventive silicone composition may further contain other optional components as long as the object of the invention is not impaired. Exemplary optional components include fillers such as fumed silica, precipitated silica, and fumed titanium oxide and such fillers which are treated on their surface with organosilicon compounds to be hydrophobic; tackifiers such as 3-glycidoxypropyltrimethoxysilane and 3-methacryloxypropyltrimethoxysilane; pigments, dyes, fluorescent dyes, heat resistance additives, and flame retardants such as triazole compounds, and plasticizers. It is noted that a heat conductive filler other than components (B) and (C) may be blended as long as the benefits of the invention are not impaired. Examples thereof include aluminum powder, copper powder, silver powder, nickel powder, gold powder, zinc oxide powder, boron nitride powder, aluminum nitride powder, diamond powder, and carbon powder.

The inventive silicone composition may be prepared by mixing predetermined amounts of the foregoing components until uniform. In the case of a one-part composition, for example, it may be prepared by preparation method 1 of mixing components (A), (B) and (C) to form a mixture, preparation method 2 of mixing components (A), (B) and (C) to form a mixture and mixing the mixture with component (D), or preparation method 3 of simultaneously mixing components (A), (B), (C) and (D). The mixing step may be performed by any well-known techniques. Also, when components (B) and (C) are treated on their surface with components (A) and (D), the surface treatment may be promoted by heat treatment, for example, at 150°C.

Although it is not critical how to add component (E), the preferred method is by mixing components (A), (B), (C) and (D), adding component (E) thereto, and mixing them. The mixing step may be performed by any well-known techniques. The method may include the step of mixing optional components.

### [Highly heat conductive silicone composition]

The highly heat conductive silicone composition should have a thermal conductivity of at least 7.0 W/m·K, preferably at least 8.0 W/m·K as measured by the hot disk method according to ISO 22007-2. The upper limit is not particularly limited and it is typically up to 12.0 W/m·K though a higher value is permissible. If the thermal conductivity is less than 7.0 W/m·K, the highly heat conductive silicone composition having a thermal conductivity as desired is not available. The measurement temperature is 25°C.

In order that the highly heat conductive silicone composition have a thermal conductivity of at least 7.0 W/m·K, components (A) to (C) are used in a specific ratio, especially components (B) and (C) are used in a volume ratio of from 5.0:5.0 to 9.5:0.5, and the total amount of components (B) and (C) is adjusted to 80 to 90% by volume of the composition, whereby the desired thermal conductivity is achievable.

The highly heat conductive silicone composition should have a viscosity at 25°C of 30 to 800 Pa·s, preferably 30 to 600 Pa·s as measured by a spiral viscometer at a speed of 10 rpm. If the viscosity is too low, the composition may fail to retain the predetermined shape. If the viscosity is too high, the composition tends to be difficult to coat.

In order that the highly heat conductive silicone composition have a viscosity in the range, components (A) to (C) are used in a specific ratio, and the amount and viscosity of component (A) are adjusted, whereby the viscosity at 25°C of the highly heat conductive silicone composition falls in the above range.

### [Cured product]

Where the silicone composition is curable, the curing method is not limited. Exemplary methods include a method of molding the silicone composition and allowing it to stand at normal temperature, and a method of molding the silicone composition and heating it at 40 to 200°C. The resulting silicone rubber (molded product of silicone elastomer) is not limited in form and may take the form of, for example, gel, low-hardness rubber, or high-hardness rubber. The silicone rubber preferably has a cured thickness of 100 µm to 2 mm when the heat dissipation ability of the inventive silicone composition is taken into account.

### EXAMPLES

Examples and Comparative Examples are shown below for further illustrating the invention, but the invention is not limited thereto. In the formulae below, Me stands for methyl.

The components used in Examples and Comparative Examples are shown below.

### Component (A)

A-1: dimethylpolysiloxane capped at both ends with dimethylvinylsiloxy groups, having a vinyl (Vi) content of 0.018 mol/100 g, and having a viscosity at 25°C of 400 mPa·s, component (A-1)
A-2: KF-54 by Shin-Etsu Chemical Co., Ltd., dimethylsiloxane/diphenylsiloxane copolymer capped at molecular chain both ends with trimethylsiloxy groups, having a specific gravity at 25°C of 1.07 and a kinematic viscosity at 25°C of 400 mPa·s
A-3: KF-50-1,000cs by Shin-Etsu Chemical Co., Ltd., dimethylsiloxane/diphenylsiloxane copolymer capped at molecular chain both ends with trimethylsiloxy groups, having a specific gravity at 25°C of 1.00 and a kinematic viscosity at 25°C of 1,000 mPa·s

### Component (B)

spherical magnesium oxide having parameters shown in Table 1

**[Table 1]**

| | Average sphericity | Average particle size (µm) | Purity (wt%) | Specific gravity |
|---|---|---|---|---|
| B-1 | 0.90 | 84 | 99.1 | 3.5 |
| B-2 | 0.90 | 122 | 98.9 | 3.5 |
| B-3 (comparison) | 0.90 | 68 | 99.2 | 3.5 |
| B-4 (comparison) | 0.70 | 96 | 98.7 | 3.5 |

### Component (C)

spherical or irregular shape aluminum oxide having parameters shown in Table 2

**[Table 2]**

| | Average sphericity | Average particle size (µm) | Proportion of coarse particles^{∗1} (wt%) | Shape | Specific gravity |
|---|---|---|---|---|---|
| C-1 [component (C-I)] | 0.90 | 9.3 | 0.2 | spherical | 4.0 |
| C-2 [component (C-II)] | - | 1.0 | - | irregular | 4.0 |
| C-3 (comparison) [component (C-I)] | 0.90 | 5.9 | 0.1 | spherical | 4.0 |
| C-4 (comparison) [component (C-II)] | - | 0.01 | - | irregular | 4.0 |

| | | | | | |
|---|---|---|---|---|---|
| ^{∗}1 proportion of coarse particles of 96-150 µm in laser diffractometry particle size distribution | | | | | |

### Component (D)

D-1: methylpolysiloxane capped at one end with trimethoxysiloxy group, having a viscosity at 25°C of 30 mPa·s, represented by the following formula, component (D-II)

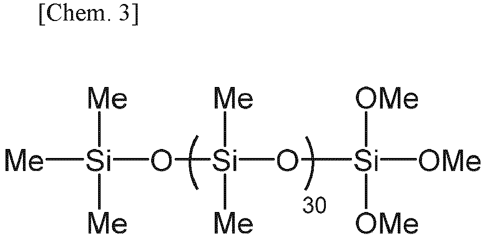

### Component (E)

E-1: Mil particle size series M-9 by Potters-Ballotini Co., Ltd., spherical glass beads having a maximum median particle size of 180 µm and a SiO₂ content of 99.4 wt% (made of soda-lime glass)

### Component (F)

F-1: methylhydrogenpolysiloxane having a viscosity at 25°C of 28 mPa·s, represented by the following formula

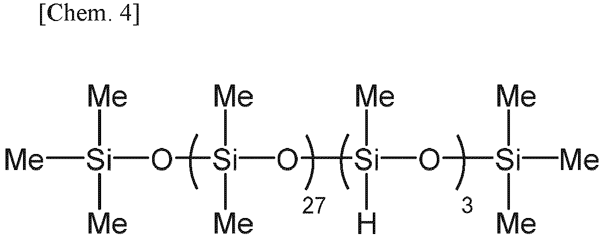

F-2: methylhydrogenpolysiloxane having a viscosity at 25°C of 17 mPa·s, represented by the following formula

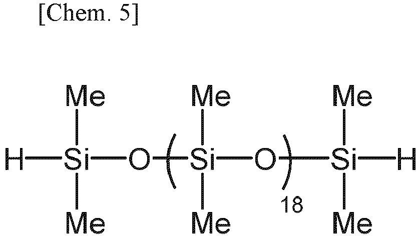

### Component (G)

- G-1:: chloroplatinic acid/1,3-divinyltetramethyldisiloxane complex having a platinum concentration of 1 wt%

### Component (H)

- H-1:: 50 wt% toluene solution of 1-ethynyl-1-cyclohexanol

### [Examples 1 to 7 and Comparative Examples 1 to 7]

A silicone composition was prepared by the following procedure using the amounts shown in Tables 3 and 4 of the foregoing components before it was molded into a heat conductive molded part. The composition and molded part were evaluated for initial viscosity, cured hardness, and thermal conductivity by the methods shown below. The results are also shown in Tables 3 and 4.

### [Preparation of silicone composition]

Each of the compositions of Examples 1 to 7 and Comparative Examples 1 to 7 was obtained by mixing the amounts shown in Tables 3 and 4 of components (A) to (H). Specifically, the amounts shown in Tables 3 and 4 of components (A), (B), (C) and (D) were metered into a 5-L gate mixer (trade name: 5-L planetary mixer by Inoue Mfg., Inc.) where they were deaerated, heated and mixed at 150°C for 2 hours. This was followed by the steps of cooling down to room temperature (25°C), adding component (G), mixing at room temperature (25°C) until uniform, subsequently adding component (H), and mixing at room temperature (25°C) until uniform. This was further followed by the steps of adding component (F), deaerating and mixing at room temperature (25°C) until uniform, optionally adding component (E), and deaerating and mixing at room temperature (25°C) until uniform.

The compositions thus obtained were evaluated for initial viscosity, cured hardness, and thermal conductivity by the methods shown below. The results are also shown in Tables 3 and 4.

### [Evaluation of initial viscosity]

The initial viscosity of the silicone composition was measured at 25°C by a spiral viscometer (Malcom viscometer Model PC-10AA) at speed 10 rpm.

### [Evaluation of cured hardness]

The silicone composition was cast into a mold and cured at 100°C for 1 hour into a plate of 6 mm thick. Two cured plates of 6 mm thick were stacked one on top of the other and measured for hardness by Asker Durometer Type C.

### [Evaluation of thermal conductivity]

The silicone composition prior to cure was measured for thermal conductivity at 25°C using a hot disk method thermal property tester TPS 2500S by Kyoto Electronics Co., Ltd. (hot disk method according to ISO 22007-2)

**[Table 3]**

| Blending amount (pbw) | | Example | | | | | | |
|---|---|---|---|---|---|---|---|---|
| | | 1 | 2 | 3 | 4 | 5 | 6 | 7 |
| (A) | A-1 | 20 | 20 | 20 | 20 | 20 | 20 | 20 |
| | A-2 | 1.25 | 1.25 | 1.25 | 1.25 | 1.25 | 1.25 | 1.25 |
| | A-3 | 1.25 | 1.25 | 1.25 | 1.25 | 1.25 | 1.25 | 1.25 |
| (B) | B-1 | 790 | 800 | | 435 | | | |
| | B-2 | | | 800 | 435 | 800 | 800 | 1,350 |
| | B-3 | | | | | | | |
| | B-4 | | | | | | | |
| (C) | C-1 | 395 | 400 | 400 | 435 | 240 | 560 | 86 |
| | C-2 | 395 | 400 | 400 | 435 | 560 | 240 | 86 |
| | C-3 | | | | | | | |
| | C-4 | | | | | | | |
| (D) | D-1 | 80 | 80 | 80 | 80 | 80 | 80 | 80 |
| (E) | E-1 | 10 | | | | | | |
| (F) | F-1 | 0.5 | 0.5 | 0.5 | 0.5 | 0.5 | 0.5 | 0.5 |
| | F-2 | 2.7 | 2.7 | 2.7 | 2.7 | 2.7 | 2.7 | 2.7 |
| (G) | G-1 | 0.3 | 0.3 | 0.3 | 0.3 | 0.3 | 0.3 | 0.3 |
| (H) | H-1 | 0.1 | 0.1 | 0.1 | 0.1 | 0.1 | 0.1 | 0.1 |
| Blending amount of components (B) and (C) (vol%) | | 80.2 | 80.2 | 80.2 | 81.5 | 80.2 | 80.2 | 80.2 |
| (B)/(C) volume ratio | | 5.32/4.68 | 5.32/4.68 | 5.32/4.68 | 5.32/4.68 | 5.32/4.68 | 5.32/4.68 | 8.99/1.01 |
| C-1/C-2 volume ratio | | 5/5 | 5/5 | 5/5 | 5/5 | 3/7 | 7/3 | 5/5 |
| pbw of (D) per 100 pbw of (A) | | 356 | 356 | 356 | 356 | 356 | 356 | 356 |
| (A) wt% | | 1.3 | 1.3 | 1.3 | 1.2 | 1.3 | 1.3 | 1.4 |
| (E) wt% | | 0.6 | | | | | | |
| (H) wt% | | 0.006 | 0.006 | 0.006 | 0.005 | 0.006 | 0.006 | 0.006 |
| Viscosity (Pa·s) | | 253 | 229 | 198 | 171 | 512 | 382 | 591 |
| Hardness (Asker C) | | 32 | 31 | 30 | 34 | 34 | 31 | 27 |
| Thermal conductivity (W/m·K) | | 7.2 | 7.2 | 7.7 | 8.2 | 7.2 | 7.1 | 8.8 |

**[Table 4]**

| Blending amount (pbw) | | Comparative Example | | | | | | |
|---|---|---|---|---|---|---|---|---|
| | | 1 | 2 | 3 | 4 | 5 | 6 | 7 |
| (A) | A-1 | 20 | 20 | 20 | 20 | 20 | 20 | 20 |
| | A-2 | 1.25 | 1.25 | 1.25 | 1.25 | 1.25 | 1.25 | 1.25 |
| | A-3 | 1.25 | 1.25 | 1.25 | 1.25 | 1.25 | 1.25 | 1.25 |
| (B) | B-1 | | | | | | | |
| | B-2 | | | 740 | 800 | 1,434 | 800 | 800 |
| | B-3 | 800 | | | | | | |
| | B-4 | | 800 | | | | | |
| (C) | C-1 | 400 | 400 | 432 | | 37 | 144 | 656 |
| | C-2 | 400 | 400 | 432 | | 37 | 656 | 144 |
| | C-3 | | | | 400 | | | |
| | C-4 | | | | 400 | | | |
| (D) | D-1 | 80 | 80 | 80 | 80 | 80 | 80 | 80 |
| (E) | E-1 | | | | | | | |
| (F) | F-1 | 0.5 | 0.5 | 0.5 | 0.5 | 0.5 | 0.5 | 0.5 |
| | F-2 | 2.7 | 2.7 | 2.7 | 2.7 | 2.7 | 2.7 | 2.7 |
| (G) | G-1 | 0.3 | 0.3 | 0.3 | 0.3 | 0.3 | 0.3 | 0.3 |
| (H) | H-1 | 0.1 | 0.1 | 0.1 | 0.1 | 0.1 | 0.1 | 0.1 |
| Blending amount of components (B) and (C) (vol%) | | 80.2 | 80.2 | 80.2 | 80.2 | 80.2 | 80.2 | 80.2 |
| (B)/(C) volume ratio | | 5.32/4.68 | 5.32/4.68 | 4.93/5.07 | 5.32/4.68 | 9.57/0.43 | 5.32/4.68 | 5.32/4.68 |
| C-1/C-2 or C-3/C-4 volume ratio | | 5/5 | 5/5 | 5/5 | 5/5 | 5/5 | 1.8/8.2 | 8.2/1.8 |
| pbw of (D) per 100 pbw of (A) | | 356 | 356 | 356 | 356 | 356 | 356 | 356 |
| (A) wt% | | 1.3 | 1.3 | 1.3 | 1.3 | 1.4 | 1.3 | 1.3 |
| (E) wt% | | | | | | | | |
| (H) wt% | | 0.006 | 0.006 | 0.006 | 0.006 | 0.006 | 0.006 | 0.006 |
| Viscosity (Pa·s) | | 321 | 435 | 374 | * | * | * | 591 |
| Hardness (Asker C) | | 33 | 31 | 32 | | | | 27 |
| Thermal conductivity (W/m·K) | | 6.0 | 6.4 | 6.8 | | | | 6.7 |

| | | | | | | | | |
|---|---|---|---|---|---|---|---|---|
| ^{∗} unmeasurable due to inhibited kneading | | | | | | | | |

## Claims

1. A highly heat conductive silicone composition comprising
(A) an organopolysiloxane,
(B) a spherical magnesium oxide powder having an average sphericity of at least 0.8, an average particle size of 80 to 150 µm, and a purity of at least 98% by weight, and
(C) (C-I) a spherical aluminum oxide powder having an average sphericity of at least 0.8 and an average particle size of 7 to 60 µm, in which coarse particles having a size of 96 to 150 µm in laser diffractometry particle size distribution account for 0.1 to 30% by weight of the overall component (C-I), and (C-II) a spherical or irregular shape aluminum oxide powder having an average particle size of 0.1 to 4 µm, wherein
a blending proportion of component (C-I) to component (C-II) ranges from 2.0:8.0 to 8.0:2.0 in volume ratio, a blending proportion of component (B) to component (C) ranges from 5.0:5.0 to 9.5:0.5 in volume ratio, the total amount of components (B) and (C) is 80 to 90% by volume of the composition, the composition has a thermal conductivity of at least 7.0 W/m·K as measured by the hot disk method according to ISO 22007-2 and a viscosity at 25°C of 30 to 800 Pa·s as measured by a spiral viscometer at a speed of 10 rpm.

2. The highly heat conductive silicone composition of claim 1 wherein component (A) accounts for 1 to 6% by weight of the composition.

3. The highly heat conductive silicone composition of claim 1 or 2 which is of addition reaction cure type using (A-I) an organopolysiloxane having on the average at least 0.1 silicon-bonded alkenyl group per molecule as component (A), of condensation cure type using (A-II) an organopolysiloxane having at least 2 silanol groups or silicon-bonded hydrolyzable groups per molecule as component (A), or of organic peroxide cure type using (A-III) an organopolysiloxane having at least 1 silicon-bonded alkenyl group per molecule as component (A).

4. The highly heat conductive silicone composition of any one of claims 1 to 3, further comprising (D) a surface treating agent.

5. The highly heat conductive silicone composition of claim 4 which contains (D-1) a silane coupling agent as component (D) in an amount of 0.1 to 5 parts by weight per 100 parts by weight of components (B) and (C) combined.

6. The highly heat conductive silicone composition of claim 4 wherein
(A-I) an organopolysiloxane having on the average at least 0.1 silicon-bonded alkenyl group per molecule or (A-III) an organopolysiloxane having at least 1 silicon-bonded alkenyl group per molecule is used as component (A), and
(D-II) an organopolysiloxane containing per molecule at least 1 silyl group having the general formula (1):
-SiR¹ₐ(OR²)₃₋ₐ (1)
wherein R¹ is independently an unsubstituted or substituted monovalent hydrocarbon group, R² is independently an alkyl group, alkoxyalkyl group, alkenyl group or acyl group, and "a" is 0, 1 or 2, and having a viscosity at 25°C of 0.01 to 30 Pa·s is contained as component (D) in an amount of 5 to 900 parts by weight per 100 parts by weight of component (A-I) or (A-III).

7. The highly heat conductive silicone composition of any one of claims 1 to 6, further comprising (E) spherical glass beads or irregular shape glass having a maximum median particle size of at least 160 µm and a SiO₂ content of at least 50% by weight, in an amount of 0.01 to 10% by weight based on the total weight of the composition.

8. A cured product of the highly heat conductive silicone composition of any one of claims 3 to 7.
